# EUROPÄISCHE PATENTANMELDUNG

(11) **EP 2 755 305 A2**
(43) Veröffentlichungstag der Anmeldung: **16.07.2014**
(21) Anmeldenummer: 14000026.6
(22) Anmeldetag: 06.01.2014
(51) Int. Cl.: H02K 7/14

(54) **Antriebseinheit, insbesondere für eine Karusselltür, mit einem elektronisch kommutierten Vielpolmotor**

(30) Priorität: 14.01.2013 DE 102013000417
(71) Anmelder: DORMA GmbH + Co. KG, 58256 Ennepetal (DE)
(72) Erfinder: Busch, Sven, D-44227 Dortmund (DE)

(57) **Zusammenfassung**

Die vorliegende Erfindung betrifft eine Antriebseinheit, insbesondere für eine Karusselltür, mit einem elektronisch kommutierten Vielpolmotor (1) aufweisend einen Statorteil (10), der an einem ruhenden Strukturbauteil (11) anordenbar ist, und aufweisend einen Rotorteil (12), der mit einer rotatorisch antreibbaren Komponente, insbesondere mit einem Drehkreuz der Karusselltür, getriebelos verbindbar ist, wobei der Statorteil (10) und der Rotorteil (12) im Wesentlichen aus paketartig gestapelten Blechelementen (13, 14) ausgebildet sind, und wobei sich die Blechelemente (13) des Statorteils (10) und die Blechelemente (14) des Rotorteils (14) parallel zueinander erstrecken.

## Beschreibung

Die vorliegende Erfindung betrifft eine Antriebseinheit, insbesondere für eine Karusselltür, mit einem elektronisch kommutierten Vielpolmotor. Ferner richtet sich die Erfindung auf eine Karusselltür mit einer Antriebseinheit umfassend einen elektronisch kommutierten Vielpolmotor.

### STAND DER TECHNIK

Die DE 10 2006 015 065 A1 beschreibt eine Antriebseinheit mit einem elektronisch kommutierten Vielpolmotor, der auch unter dem Begriff des Torquemotors bekannt ist. Das Drehmoment wird in der Regel durch einen feststehenden Stator erreicht, der über den Luftspalt das Drehmoment direkt auf den Rotor überträgt. Bei diesem Antriebskonzept entfallen mechanische Übertragungselemente, wie beispielsweise ein Getriebe und damit auch die durch Getriebemechanik bedingten Ungenauigkeiten. Außerdem bietet der Vielpolmotor einen nahezu verschleiß- und wartungsfreien Betrieb. Der Vielpolmotor weist einen Statorteil auf, der beispielhaft an einem Strukturbauteil einer Maschine angeflanscht ist. Ferner weist der Vielpolmotor einen Rotor auf, der ringförmig ausgebildet ist und am Stator drehbar aufgenommen ist.

Die DIE 10 2010 024 108 A1 zeigt eine Antriebseinheit für eine Karusselltür, die als elektronisch kommutierter Vielpolmotor ausgebildet ist. Der Vielpolmotor weist eine scheibenförmige, flache Gestalt auf, und ist mit einer Bauhöhe von weniger als 80 mm beschrieben. Dadurch eignet sich der Vielpolmotor auf besonders vorteilhafte Weise zum Antrieb des Drehkreuzes der Karusselltür, insbesondere da kein Getriebe notwendig ist, um die Drehbewegung des Rotorteils des Vielpolmotors auf das Drehkreuz zu übertragen.

Vielpolmotoren weisen eine Anzahl von Spulenelementen und eine Anzahl von Magnetelementen auf, und die Spulenelemente sind vorzugsweise am Statorteil angeordnet, und die Magnetelemente sind vorzugsweise am Rotorteil angeordnet. Werden die Spulenelemente unter elektronischer Kommutierung bestromt, so wird ein um eine Antriebsachse umlaufendes Magnetfeld durch eine aufeinanderfolgende Bestromung der Spulenelemente erreicht, wodurch eine Drehbewegung des Rotorteils am Statorteil erzielt wird. Der Statorteil ist häufig aus Gehäusekomponenten aufgebaut, in denen der Rotorteil konzentrisch zur Symmetrieachse des Gehäuses rotiert. Zur Verbesserung des magnetischen Feldschlusses weisen die Spulenelemente ferritische Kerne auf, auf denen Wicklungskörper aufgebracht sind. Auch die Magnetelemente können durch ferritische Elemente aufgenommen sein, durch die ebenfalls der magnetische Feldschluss optimiert wird. Die ferritischen Aufnahmeelemente für die Wicklungskörper der Spulenelemente und der Magnetelemente sind dabei meist an den Gehäusekomponenten der Vielpolmotoren angeordnet. Dadurch entsteht eine aufwendige, häufig Gussteile und spanend bearbeitete Bauteile umfassende Konstruktion, die dazu ausgelegt ist, den Bereich zwischen dem Rotorteil und dem Statorteil möglichst abzudichten. Auch entsteht der Nachteil, dass Vielpolmotoren häufig durch Gehäuse umschlossen werden, aus dem eine Abtriebswelle herausgeführt ist, die ebenfalls abgedichtet werden muss. Der Grundaufbau solcher Motoren ist grundsätzlich langzylindrisch ausgebildet, und ein Anker rotiert entlang der Symmetrieachse des langzylindrischen Statorgehäuses.

### OFFENBARUNG DER ERFINDUNG

Ausgehend von den Nachteilen des Standes der Technik liegt der Erfindung die Aufgabe zugrunde, eine Antriebseinheit mit einem elektronisch kommutierten Vielpolmotor zu schaffen, wobei der Vielpolmotor eine möglichst flache und zugleich flache Ausführung aufweist und aus einfachen Elementen aufgebaut ist. Insbesondere ist es die Aufgabe der Erfindung, einen Vielpolmotor auf einfache Weise mit einer Gestalt auszuführen, die den Vielpolmotor zum Einbau in eine Karusselltür qualifiziert und dadurch auf einfache Weise zum Antrieb des Drehkreuzes der Karusselltür dienen kann.

Diese Aufgabe wird ausgehend von einer Antriebseinheit gemäß Anspruch 1 mit den kennzeichnenden Merkmalen gelöst. Vorteilhafte Weiterbildungen der Erfindung sind in den abhängigen Ansprüchen angegeben.

Die Erfindung schlägt zur Lösung der Aufgabe eine Antriebseinheit gemäß Anspruch 1 vor. Die Antriebseinheit ist insbesondere für eine Karusselltür ausgebildet und mit einem elektronisch kommutierten Vielpolmotor ausgeführt, wobei der Vielpolmotor einen Statorteil aufweist, der an einem ruhenden Strukturbauteil anordbar ist, und wobei der Vielpolmotor einen Rotorteil aufweist, der mit einer rotatorisch antreibbaren Komponente, insbesondere mit einem Drehkreuz der Karusselltür, getriebelos verbindbar ist, wobei der Statorteil und der Rotorteil im Wesentlichen aus paketartig gestapelten Blechelementen ausgebildet ist, und wobei sich die Blechelemente des Statorteils und die Blechelemente des Rotorteils parallel zueinander erstrecken.

Durch die erfindungsgemäße Ausgestaltung des Rotorteils und des Statorteils mit sich parallel zueinander erstreckenden Blechelemente wird auf einfache Weise ein elektronisch kommutierter Vielpolmotor geschaffen, der eine flache, tellerartige Gestalt aufweisen kann, um zum Antrieb des Drehkreuzes in einer Karusselltür vorteilhaft dienen zu können. Sind die Blechelemente paketartig gestapelt, so kann ein Volumenkörper gestaltet werden, der insbesondere eine scheibenförmige oder topfförmige Gestalt aufweisen kann, wobei zur Bildung des Statorteils 10 oder des Rotorteils 12 auch nur ein oder wenige Blechelemente deinen können. Somit kann der Statorteil vorteilhaft eine Scheibenform oder eine Topfform aufweisen, und ebenso kann der Rotorteil eine Scheibenform oder eine Topfform aufweisen. Die Blechelemente zur Bildung des Statorteils und die Blechelemente zur Bildung des Rotorteils müssen dabei nicht jeweils zueinander gleiche Formen aufweisen, und durch einen unterschiedlichen Schnitt der Blechelemente können dreidimensionale Volumenkörper bereitgestellt werden, wenn die Blechelemente unterschiedlicher Ausgestaltung paketartig aufeinandergestapelt werden. Auf besonders vorteilhafte Weise ergibt sich die Möglichkeit, die Spulenelemente an den Blechelementen des Statorteils 10 und die Magnetelemente an den Blechelementen des Rotorteils aufzunehmen.

Vielpolmotoren sind auch unter der Bezeichnung der Torquemotoren bekannt und weisen grundsätzlich auf einer Kreisbahn angeordnete Spulenelemente auf, die ebenfalls auf einer Kreisbahn angeordneten Magnetelementen gegenüberstehen, beispielsweise innenseitig, außenseitig oder axial gegenüberstehend, sodass ein hochpoliger, drehmomentstarker Direktantrieb gebildet ist.

Mit besonderem Vorteil kann das Verhältnis aus Höhe zu Durchmesser der im Wesentlichen runden, flach ausgebildeten Grundstruktur des elektronisch kommutierten Vielpolmotors einen Wert von wenigstens 1:3, vorzugsweise von wenigstens 1:4, besonders bevorzugt von wenigstens 1:5 und am meisten bevorzugt von wenigstens 1:8 und mehr aufweisen. Das Verhältnis aus Höhe zu Durchmesser ergibt sich durch den parallelen Abstand des scheibenförmigen oder topfförmigen Statorteils zum scheibenförmigen oder topfförmigen Rotorteil des Vielpolmotors zum Durchmesser des Statorteils und/oder des Rotorteils. Dadurch, dass die Spulenelemente und die Magnetelemente zwischen dem Statorteil und dem Rotorteil angeordnet sind, lassen sich erst die Verhältnisse aus Höhe zu Durchmesser von bis zu 1:8 und mehr erreichen, und es hat sich gezeigt, dass sogar Grundstrukturen von Vielpolmotoren als Antrieb für Karusselltüren zum Einsatz kommen können, die ein Verhältnis aus Höhe zu Durchmesser von mehr als 1:12 erreichen können.

Die flache, scheibenförmige Bauform des Vielpolmotors bedingt dabei den positiven Effekt eines hohen erzielbaren, für den Betrieb einer Karusselltür auch notwendigen Drehmomentes, da der umlaufende Luftspaltradius zwischen den Spulenelementen und den Magnetelementen sehr groß gestaltet werden kann, insbesondere wenn der Vielpolmotor als Außenläufer ausgebildet ist.

Mit besonderem Vorteil kann der Statorteil und/oder der Rotorteil eine scheibenförmige oder eine topfförmige Gestalt aufweisen, die durch die Grundform von einem und vorzugsweise von mehreren Blechelementen bestimmt ist. Der Rotorteil kann sich dabei im Wesentlichen planparallel zum Statorteil erstrecken, insbesondere dadurch, dass die Blechelemente des Statorteils erfindungsgemäß mit den Blechelementen des Rotorteils parallel verlaufen. Weist der Statorteil und vorzugsweise der Rotorteil eine topfförmige Gestalt auf, so kann zumindest ein Bodenbereich ein Blechelement bilden und ebenfalls eine flächige Erstreckung aufweisen, wobei die Topfform beispielsweise durch ein Tiefziehvorgang oder durch ein Projektionsdrücken hergestellt werden kann. Beispielsweise kann ein topfförmiger Rotor den Stator glockenartig überdecken, sodass die Spulenelemente und die Magnetelemente zwischen dem Rotorteil und dem Statorteil durch die Topfform des Rotors geschützt aufnehmbar sind. Folglich kann der Rotorteil aus einer Anzahl von sich in einer Ebene erstreckenden Blechelementen gebildet sein, die paketartig aufeinandergestapelt sind, und ein abschließendes Blechelement kann beispielsweise eine dritte Dimension aufweisen, hergestellt durch beispielsweise ein Tiefziehen oder ein Projektionsdrücken.

Mit weiterem Vorteil können die Blechelemente zur Bildung des Statorteils wenigstens teilweise kammartige Strukturabschnitte aufweisen, wobei an den Strukturabschnitten Spulenelemente aufgenommen sein können, die insbesondere zwischen dem Statorteil und dem Rotorteil angeordnet sind. Neben Blechelementen zur Aufnahme der Spulenkörper können weitere Blechelemente vorgesehen sein, die die Grundstruktur des Stators bilden, insbesondere kann ein Bodenblech vorgesehen sein, dass sich über den gesamten flächigen Querschnitt des Vielpolmotors erstreckt. Hingegen können die Blechelemente mit kammartigen Strukturabschnitten ringförmig oder segmentförmig ausgebildet sein, und die kammartigen Strukturabschnitte können Spulenzähne aufweisen, auf denen die Spulenkörper aufgenommen werden können.

Nach einer weiteren vorteilhaften Ausführungsform der erfindungsgemäßen Antriebseinheit können in Anordnung zwischen dem Statorteil und dem Rotorteil mehrere Magnetelemente vorgesehen sein, wobei die Magnetelemente an einem oder an den den Rotorteil bildenden Blechelementen angeordnet sind. Insbesondere können die Magnetelemente derart an mehreren Blechelementen angeordnet sein, dass sich die Magnetelemente über mehrere Randflächen von aufeinander paketartig gestapelten Blechelementen erstrecken. Insbesondere dadurch wird der magnetische Feldschluss weiter optimiert, da sich die Blechelemente in Ebenen erstrecken, die die Feldlinien des magnetischen Feldschlusses durchlaufen. Die Feldlinien müssen folglich nicht von Blechelement zu Blechelement geführt werden, sondern können sich in der flächigen Erstreckung jeder der Blechelemente ausbreiten.

Die Blechelemente können wenigstens teilweise aus einem magnetisierbaren Material, insbesondere aus einem Eisenwerkstoff, ausgebildet sein. Besonders vorteilhaft sind metallische Werkstoffe mit einer magnetischen Permeabilität, die beispielsweise Werte von bis zu 15.000 erreichen können, sodass die Materialien insbesondere ferromagnetische Eigenschaften aufweisen. Bevorzugt können amorphe Metalle oder sogar nanokristalline Metalle zur Bildung von Teilen der Blechelemente Verwendung finden, die eine deutlich gesteigerte Permeabilität aufweisen können.

Die Blechelemente, die den Statorteil bilden und zur Aufnahme der Spulenelemente dienen und/oder die Blechelemente, die den Rotorteil bilden und zur Aufnahme der Magnetelemente dienen, können somit jeweils einen magnetischen Rückschlusskörper bilden. Insbesondere bei einer Materialwahl der Blechelemente das ferromagnetische Eigenschaften aufweist, kann auf besonders vorteilhafte Weise ein magnetischer Rückschlusskörper gebildet werden. Dabei müssen die Blechelemente zur Bildung des Statorteils und/oder zur Bildung des Rotorteils nicht grundsätzlich die gleiche Materialwahl aufweisen, und beispielsweise kann das Bodenblech des Stators und/oder das Deckblech des Rotors, an dem beispielsweise die anzutreibende Komponente angeordnet werden kann, aus einem nicht ferromagnetischen Material bestehen, beispielsweise aus A-luminium.

Die Blechelemente können sich flächig oder ringförmig um die Mittelachse des Vielpolmotor erstrecken, die die Antriebsachse bilden kann. Mit besonderem Vorteil können die Blechelemente jedoch durch Blechsegmente gebildet sein, die insbesondere Ebene für Ebene gestapelt aufeinander zu einem flachzylindrischen Vielpolmotor aneinander gesetzt und/oder miteinander gefügt sein können. Dadurch kann der erforderliche Materialeinsatz zur Bereitstellung der Blechelemente minimiert werden, und halbmondförmige oder sichelförmige Blechsegmente können so aneinander gesetzt werden, dass die Blechelemente beispielsweise einen Ring bilden, insbesondere zur Aufnahme der Magnetelemente oder der Spulenelemente, Die Blechsegmente können dabei durch stoffschlüssige Fügeverfahren oder durch Verbindungselemente miteinander gefügt werden, wenn diese sowohl innerhalb einer Ebene aneinander gefügt und Ebene für Ebene aufeinandergestapelt sind.

Mit weiterem Vorteil kann der Rotorteil durch eine Lageranordnung in etwa planparalleler Anordnung am Statorteil in der Antriebsachse drehbar aufgenommen sein. Der Rotorteil kann eine im Wesentlichen flächige Gestalt aufweisen, und lediglich zur Einführung der Magnetelemente innerhalb des Ringes, in oder an dem die Spulenelemente angeordnet sind, kann der Rotorteil einen tragenden Abschnitt aufweisen, um die Magnetelemente anzubringen. Ebenso kann der Statorteil eine im Wesentlichen plane Erstreckung aufweisen, und lediglich zur Aufnahme der Spulenelemente kann der Statorteil Abschnitte aufweisen, an denen die Spulenelemente aufgenommen sind. Mit besonderem Vorteil können die Magnetelemente außenseitig zu den auf einer Kreisbahn angeordneten Spulenelementen angeordnet sein, sodass der Vielpolmotor als Außenläufer ausgebildet ist, wodurch ein besonders hohes Drehmoment erzielbar ist. Die Lageranordnung kann wenigstens ein Wälzlager aufweisen, welches als Axiallager ausgeführt sein kann, auch besteht die Möglichkeit, die Lageranordnung wenigstens teilweise durch ein Gleitlager zu bilden, das als Axial- und/ oder als Radiallager ausgebildet ist.

Die Magnetelemente können am Rotorteil einen radialen Spalt bildend den Spulenelementen am Statorteil gegenüberliegend angeordnet sein, wobei die Spulenelemente und die Magnetelemente einen axialen Versatz zueinander aufweisen können. Der axiale Versatz kann derart gestaltet sein, dass der Rotorteil durch die magnetische Wirkung der Magnetelemente selbsthaltend am Statorteil angeordnet sein kann. Dabei müssen die Spulenelemente nicht bestromt sein, und durch den axialen Versatz der Magnetelemente entsteht eine Axialkraft auf den Rotorteil, sodass dieser selbsthaltend am Statorteil angeordnet ist. Insbesondere kann die Kraftwirkung durch den axialen Versatz derart ausgestaltet sein, dass die Lageranordnung zwischen dem Statorteil und dem Rotorteil in gefügter Anordnung verbleibt, ohne dass in Axialrichtung formschlüssige Halteelemente erforderlich sind, um eine verliersichere Anordnung des Rotorteils am Statorteil zu schaffen.

Die vorliegende Erfindung richtet sich ferner auf eine Karusselltür mit einer Antriebseinheit mit einem elektronisch kommutierten Vielpolmotor aufweisend einen Statorteil, der an einem ruhenden Strukturbauteil der Karusselltür angeordnet ist, und aufweisend einen Rotorteil, der mit einem Drehkreuz der Karusselltür getriebelos verbunden ist, wobei der Statorteil und der Rotorteil im Wesentlichen aus paketartig gestapelten Blechelementen ausgebildet sind, und wobei sich die Blechelemente des Statorteils und die Blechelemente des Rotorteils parallel zueinander erstrecken. Die in Zusammenhang mit der Antriebseinheit vorstehend beschriebenen weiteren Merkmale und zugehörigen Vorteile finden auf die erfindungsgemäße Karusselltür mit einer solchen Antriebseinheit ebenfalls Berücksichtigung.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein erstes Ausführungsbeispiel eines Vielpolmotors zur Bildung einer Antriebseinheit, wobei der Vielpolmotor einen Rotorteil und einen Statorteil aufweist, die teilweise aus Blechelementen in paketartig gestapelter Anordnung ausgebildet sind,
- Figur 2: ein weiteres Ausführungsbeispiel einer Antriebseinheit mit einem Statorteil und einem Rotorteil, wobei der Statorteil und der Rotorteil jeweils vollständig aus paketartig aufeinander gestapelten Blechelementen ausgebildet ist und
- Figur 3: ein weiteres Ausführungsbeispiel einer Antriebseinheit, die als elektronisch kommutierter Vielpolmotor ausgebildet ist und einen Innenläufer bildet.

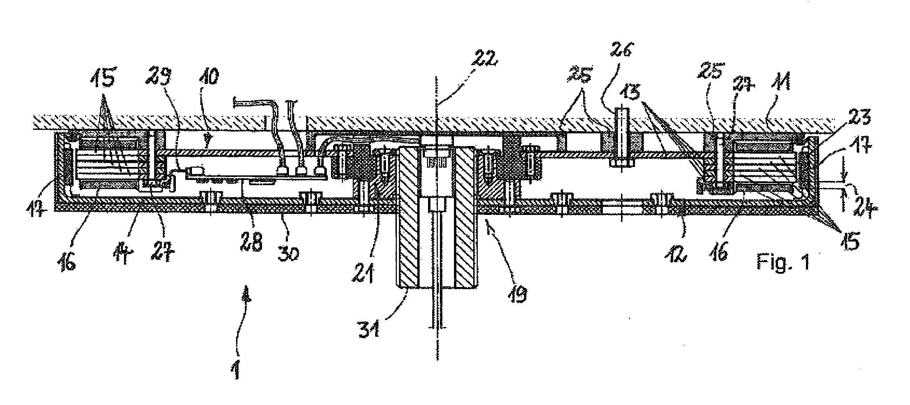

Figur 1 zeigt ein Ausführungsbeispiel eines elektronisch kommutierten Vielpolmotors 1 zur Bildung einer Antriebseinheit, wie diese beispielsweise zum Antrieb des Drehkreuzes in einer Karusselltür eingesetzt werden kann. Der Vielpolmotor 1 weist einen Statorteil 10 und einen Rotorteil 12 auf, wobei der Statorteil 10 zunächst ein Sockelelement 25 umfasst, mit dem der Statorteil 10 an einem Strukturbauteil 11 mittels Schraubelementen 26 angebracht ist. Weiterhin umfasst der Statorteil 10 mehrere Blechelemente 13, die in ihrer flächigen Erstreckung unterschiedlich ausgeführt sind. Beispielhaft gezeigt ist ein Blechelement 13, das sich im Wesentlichen über der gesamten Querschnittsfläche des Statorteils 10 erstreckt, und weitere Blechelemente 13 weisen kammartige Strukturelemente 15 auf, und auf den Zähnen der kammartigen Strukturelemente 15 sind Spulenelemente 16 aufgenommen. Die Blechelemente 13 sind mit Verbindungsmitteln 27 in Form von Schrauben paketartig aufeinander gestapelt, und die Stapelrichtung der Blechelemente 13 entspricht der Erstreckungsrichtung der Antriebsachse 22 des Vielpolmotors 1.

Die mit einer kammartigen Struktur ausgebildeten Blechelemente 13 ermöglichen eine Anordnung einer Vielzahl von Spulenelementen 16 auf einer Kreisbahn, sodass innerhalb des durch die Spulenelemente 16 gebildeten Spulenringes ein Raum gebildet ist, in dem Komponenten aufgenommen werden können. Innerhalb des durch die Spulenelemente 16 umschlossenen Raumes ist beispielhaft eine Steuereinheit 28 gezeigt, die im Wesentlichen zur Steuerung des Betriebs des Vielpolmotors dient. Insbesondere kann über die Steuereinheit 28 die elektronische Kommutierung der Spulenelemente 16 erfolgen, beispielhaft ist hierfür eine elektrische Verbindung 29 zwischen der Steuereinheit 28 und den Spulenelementen 16 gezeigt.

Der Rotor 12 weist beispielhaft ein Blechelement 14 auf, das durch ein Umformverfahren topfförmig ausgebildet ist. Auf der Planfläche des Blechelementes 14 ist ein Deckelement 30 angeordnet, das sich parallel zum Blechelement 14 erstreckt. Innenseitig im topfförmigen Rotorteil 12 sind Magnetelemente 17 angeordnet, die die Spulenelemente 16 außenseitig umschließen. Damit ist der Vielpolmotor 1 gemäß dem gezeigten Ausführungsbeispiel als sogenannter Außenläufer ausgebildet.

Die Magnetelemente 17 bilden mit den Spulenelementen 16 einen um die Antriebsachse 22 umlaufenden radialen Spalt 23, mit dem die Magnetelemente 17 zu den Spulenelementen 16 beziehungsweise den Zähnen der kammartigen Strukturabschnitte 15 der Blechelemente 13 beabstandet sind. Dabei ist ein axialer Versatz 24 zwischen den Spulenelementen 16 und den Magnetelementen 17 vorgesehen, sodass die Magnetelemente 17 die Spulenelemente 16 an einer Seite überragen. Dadurch wird eine Axialkraft auf den Rotorteil 12 in Richtung zur Antriebsachse 22 erzeugt, sodass durch den axialen Versatz 24 der Rotorteil 12 durch magnetische Kräfte am Statorteil 10 gehalten ist.

Zur drehbaren Aufnahme des planparallel zum Statorteil 10 sich erstreckenden Rotorteil 12 dient eine Lageranordnung 19, und das Ausführungsbeispiel zeigt die Lageranordnung 19 mit einem axialen und einem radialen Gleitlager 21. Innenseitig in der Lageranordnung 19 ist eine Abtriebswelle 31 gezeigt, die beispielhaft als Vielkeilwelle ausgeführt ist und an die das Drehkreuz der Karusselltür getriebelos anordbar ist. Alternativ kann das Drehkreuz der Karusselltür an das Blechelement 14 bzw. an das Deckelement 30 flächig angebracht werden.

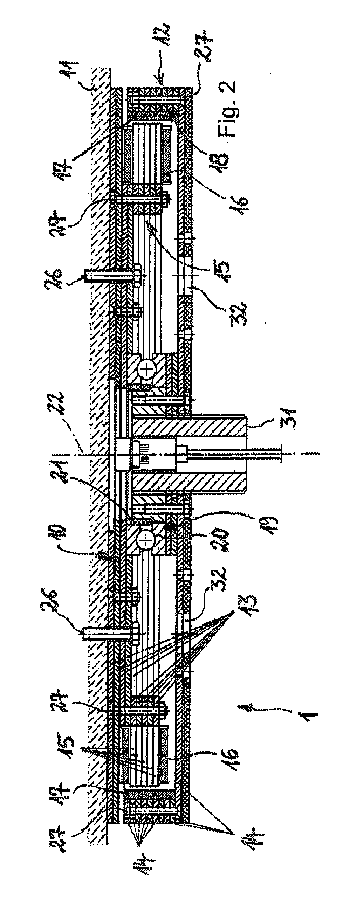

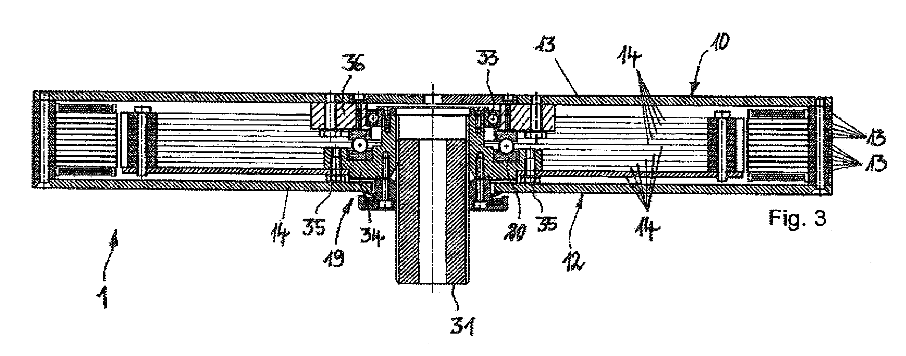

Das Ausführungsbeispiel des Vielpolmotors 1 zeigt, dass nicht alle Bestandteile des Statorteils 10 und des Rotorteils 12 aus einer Vielzahl von Blechelementen 13 und 14 aufgebaut sein müssen. Besonders vorteilhafte Ausgestaltungen von Vielpolmotoren 1 im Sinne der vorliegenden Erfindung sind mit den folgenden Figuren 2 und 3 beschrieben, die Statorteile 10 und Rotorteile 12 aufweisen, die im Wesentlichen ausschließlich aus Blechelementen 13 und 14 aufgebaut sind.

Figur 2 zeigt ein Ausführungsbeispiel des Vielpolmotors 1 mit einem Statorteil 10, der an einem Strukturbauteil 11 angeordnet ist, beispielsweise kann das Strukturbauteil 11 das Deckenelement oder das Bodenelement einer Karusselltür sein. Der Rotorteil 12 ist über eine Lageranordnung 19 drehbar am Statorteil 10 aufgenommen, wobei die Lageranordnung 19 ein Wälzlager 20 und ein Gleitlager 21 umfasst.

Der Statorteil 10 ist ausschließlich aus plan ausgebildeten Blechelementen 13 gebildet, die paketartig aufeinander gestapelt sind und durch Verbindungsmittel 27 aufeinandergehalten sind. Die gestapelten Blechelemente 13 sind durch Schraubelemente 26 am Strukturbauteil 11 angebracht. Teile der Blechelemente 13 sind durch Strukturabschnitte 15 gebildet, die kammartig ausgebildet sind und Zähne umfassen, auf denen Spulenelemente 16 aufgenommen sind. Die Spulenelemente 16 verlaufen um die Antriebsachse 22 auf einer Kreisbahn, und bilden somit einen Spulenring. Außenseitig der Spulenelemente 16 sind Magnetelemente 17 angeordnet, die am Rotorteil 12 aufgenommen sind. Der Rotorteil 12 weist ebenfalls eine Anzahl von Blechelementen 14 in einer aufeinander gestapelten Anordnung auf, und auch die Blechelemente 14 des Rotorteils 12 sind durch weitere Verbindungsmittel 27 aufeinander gehalten.

Die Blechelemente 14, an denen die Magnetelemente 17 aufgenommen sind, besitzen Randflächen 18. Die Magnetelemente 17 sind dabei an den Randflächen 18 der Blechelemente 14 aufgenommen, sodass sich über der Höhe der Magnetelemente 17 mehrere Blechelemente 14 erstrecken. Damit wird die Maximierung des magnetischen Feldschlusses optimiert, der durch den Bereich der Blechelemente 14 gebildet wird, die sich rückseitig hinter den Magnetelementen 17 erstrecken. Die Erstreckungsrichtung der Blechelemente 13 zur Bildung des Statorteils 10 und der Blechelemente 14 zur Bildung des Rotorteils 12 fallen dabei in gleichen Ebenen zusammen, und auch rückseitig der Spulenelemente 16 bewirken die Strukturabschnitte 15 zur Aufnahme der Spulenelemente 16 eine Maximierung des magnetischen Feldschlusses.

Zur Montage des Vielpolmotors 1 am Strukturbauteil 11 dienen die Schraubelemente 26, und um die Schraubelemente 26 mit einem Werkzeug zu erreichen, weisen die Blechelemente 14 des Rotorteils 12 Werkzeugöffnungen 32 auf. Folglich kann der Vielpolmotor 1 bereits einsatzfertig vormontiert werden, um auch mit bereits am Statorteil 10 angeordneten Rotorteil 12 den Vielpolmotor 1 am Strukturbauteil 11 anzubringen.

Figur 3 zeigt schließlich ein letztes Ausführungsbeispiel des Vielpolmotors 1 mit einem Statorteil 10 und mit einem Rotorteil 12, wobei der Statorteil 10 aus mehreren paketartig aufeinander gestapelten Blechelementen 13 besteht, und der Rotorteil 12 besteht ebenfalls aus einer Anzahl von paketartig aufeinandergestapelten Blechelementen 14. Dabei sind einzelne Blechelemente 13 und 14 flächig über dem gesamten Umfang des flachen, tellerartigen Vielpolmotors 1 ausgebildet, und bilden tragende Blechelemente 13. Ringförmig ausgebildete Blechelemente 13 dienen zur Aufnahme der Spulenelementen 16 und ebenfalls ringförmig ausgebildete Blechelemente 14 bilden die Aufnahme von Magnetelementen 17. Dabei sind die Magnetelemente 17 beispielhaft innenseitig der Spulenelemente 16 angeordnet, sodass das Ausführungsbeispiel des Vielpolmotors 1 einen Innenläufer bildet.

Die Blechelemente 13 und 14 zur Aufnahme der Spulenelemente 16 und der Magnetelemente 17 können alternativ zur ringförmigen Ausgestaltung auch durch Blechsegmente gebildet sein, sodass die Blechelemente 13 und 14 nicht vollständig als um die Antriebsachse 42 ausgebildete Ringe ausgeführt sein müssen. Die Blechelemente 13 und 14 können aus einer Vielzahl von Blechsegmenten zusammengesetzt sein, die Ebene für Ebene gestapelt aufeinander zu einem flachzylinderförmigen Statorteil 10 und einem flachzylinderförmigen Rotorteil 12 aneinander gesetzt und/oder miteinander gefügt sind. Im Ergebnis entsteht ein ebenfalls flachzylinderförmiger Vielpolmotor 1, der aus Blechelementen 13 und 14 ausgebildet ist, die durch Scherschnittverfahren oder beispielsweise durch Laserschnittverfahren hergestellt sein können.

Der Rotorteil 12 ist über eine Lageranordnung 19 am Statorteil 10 drehbar aufgenommen, wobei die Lageranordnung 19 ein Wälzlager 20 und ein weiteres Wälzlager 33 aufweist, wobei das Wälzlager 20 als Axialwälzlager und das Wälzlager 33 als Radialwälzlager ausgebildet ist. Innenseitig in der Lageranordnung 19 ist eine Abtriebswelle 31 gezeigt.

Das sich über dem Umfang des Rotorteils 12 erstreckende Blechelement 14, das die Grundstruktur des Rotorteils 14 bildet, ist an einem Nabenelement 34 mittels Schraubelementen 35 angeordnet, und die Abtriebswelle 31 ist im Nabenelement 34 aufgenommen. Ferner sind die Wälzlager 20 und 33 an einem Ringkörper 36 aufgenommen, die Bestandteil des Statorteils 10 ist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumliche Anordnungen, können sowohl für sich als auch in den verschiedensten Kombinationen erfindungswesentlich sein. Die Ausgestaltung des Statorteils 10 und des Rotorteils 12 durch Blechelemente 13 und 14 richtet sich dabei auf die wesentliche Struktur des Statorteils 10 und des Rotorteils 12, und der Statorteil 10 und/oder der Rotorteil 12 können auch weitere, nicht als Blechelemente 13 und 14 ausgebildete Komponenten umfassen. Der wesentliche Gedanke der Erfindung ist jedoch damit erfüllt, dass die tellerartige, etwa scheibenförmige, flachzylindrische Form des Vielpolmotors 1 auf äußerst einfache Weise durch Blechelemente 13 und 14 erzeugt wird, auf denen die Antriebsachse 22 eine Flächennormale bildet.

### Bezugszeichenliste

- 1: Vielpolmotor
- 10: Statorteil
- 11: Strukturbauteil
- 12: Rotorteil
- 13: Blechelement
- 14: Blechelement
- 15: Strukturabschnitt
- 16: Spulenelement
- 17: Magnetelement
- 18: Randfläche
- 19: Lageranordnung
- 20: Wälzlager
- 21: Gleitlager
- 22: Antriebsachse
- 23: radialer Spalt
- 24: axialer Versatz
- 25: Sockelelement
- 26: Schraubelement
- 27: Verbindungsmittel
- 28: Steuereinheit
- 29: elektrische Verbindung
- 30: Deckelement
- 31: Abtriebswelle
- 32: Werkzeugöffnung
- 33: Wälzlager
- 34: Nabenelement
- 35: Schraubelement
- 36: Ringkörper

## Patentansprüche

1. Antriebseinheit, insbesondere für eine Karusselltür mit einem elektronisch kommutierten Vielpolmotor (1) aufweisend einen Statorteil (10), der an einem ruhenden Strukturbauteil (11) anordbar ist, und aufweisend einen Rotorteil (12), der mit einer rotatorisch antreibbaren Komponente, insbesondere mit einem Drehkreuz der Karusselltür getriebelos verbindbar ist, wobei der Statorteil (10) und der Rotorteil (12) im Wesentlichen aus paketartig gestapelten Blechelementen (13, 14) ausgebildet sind, und wobei sich die Blechelemente (13) des Statorteils (10) und die Blechelemente (14) des Rotorteils (14) parallel zueinander erstrecken.

2. Antriebseinheit nach Anspruch 1, **dadurch gekennzeichnet, dass** der Statorteil (10) und/oder der Rotorteil (12) eine scheibenförmige oder eine topfförmige Gestalt aufweisen, die durch die Grundform von einem und vorzugsweise von mehreren Blechelementen (13, 14) gebildet ist, wobei sich der Rotorteil (12) im Wesentlichen planparallel zum Statorteil (10) erstreckt.

3. Antriebseinheit nach Anspruch 1 oder 2, **dadurch gekennzeichnet, dass** die Blechelemente (13) zur Bildung des Statorteils (10) wenigstens teilweise kammartige Strukturabschnitte (15) aufweisen, wobei an den Strukturabschnitten (15) Spulenelemente (16) aufgenommen sind, die insbesondere zwischen dem Statorteil (10) und dem Rotorteil (12) angeordnet sind.

4. Antriebseinheit nach einem der Ansprüche 1 bis 3, **dadurch gekennzeichnet, dass** in Anordnung zwischen dem Statorteil (10) und dem Rotorteil (12) mehrere Magnetelemente (17) vorgesehen sind, wobei die Magnetelemente (17) an einem oder an den den Rotorteil (12) bildenden Blechelementen (14) angeordnet sind.

5. Antriebseinheit nach Anspruch 4, **dadurch gekennzeichnet, dass** die Magnetelemente (17) derart an mehreren Blechelementen (14) angeordnet sind, dass sich die Magnetelemente (17) über mehrere Randflächen (18) von aufeinander paketartig gestapelten Blechelementen (14) erstrecken.

6. Antriebseinheit nach einem der vorgenannten Ansprüche, **dadurch gekennzeichnet, dass** die Blechelemente (13, 14) wenigstens teilweise aus einem magnetisierbaren Material, insbesondere aus einem Eisenwerkstoff, ausgebildet sind.

7. Antriebseinheit nach einem der vorgenannten Ansprüche, **dadurch gekennzeichnet, dass** die Blechelemente (13), die den Statorteil (10) bilden und zur Aufnahme der Spulenelemente (16) dienen und/oder die Blechelemente (14), die den Rotorteil (12) bilden und zur Aufnahme der Magnetelemente (17) dienen, jeweils einen magnetischen Rückschlusskörper bilden.

8. Antriebseinheit nach einem der vorgenannten Ansprüche, **dadurch gekennzeichnet, dass** die Blechelemente (13, 14) Blechsegmente bilden, die insbesondere Ebene für Ebene gestapelt aufeinander zu einem flachzylinderförmigen Vielpolmotor (1) aneinandergesetzt und/oder miteinander gefügt sind.

9. Antriebseinheit nach einem der vorgenannten Ansprüche, **dadurch gekennzeichnet, dass** der Rotorteil (12) durch eine Lageranordnung (19) in etwa planparalleler Anordnung am Statorteil (10) in einer Antriebsachse (22) drehbar gelagert aufgenommen ist.

10. Antriebseinheit nach Antriebseinheit nach Anspruch 9, **dadurch gekennzeichnet, dass** die Lageranordnung (19) wenigstens ein Wälzlager (20) aufweist, welches als Axiallager ausgeführt ist und/oder dass die Lageranordnung (19) wenigstens ein Gleitlager (21) aufweist, das als Axial- und/oder als Radiallager ausgebildet ist.

11. Antriebseinheit nach einem der vorgenannten Ansprüche, **dadurch gekennzeichnet, dass** die Magnetelemente (17) am Rotorteil (12) einen radialen Spalt (23) bildend den Spulenelementen (16) am Statorteil (10) gegenüberliegend angeordnet sind, wobei die Spulenelemente (16) und die Magnetelemente (17) einen axialen Versatz (24) zueinander aufweisen.

12. Karusselltür mit einer Antriebseinheit nach einem der vorgenannten Ansprüche.
